# EUROPÄISCHE PATENTSCHRIFT

(11) **EP 3 191 902 B1**
(45) Veröffentlichungstag und Bekanntmachung des Hinweises auf die Patenterteilung: **22.04.2020**
(21) Anmeldenummer: 15797048.4
(22) Anmeldetag: 13.11.2015
(51) Int. Cl.: G05B 19/05

(54) **VERFAHREN ZUM ZUGREIFEN AUF FUNKTIONEN EINES EMBEDDED-GERÄTS**
METHOD FOR ACCESSING FUNCTIONS OF AN EMBEDDED DEVICE
PROCÉDÉ POUR ACCÉDER À DES FONCTIONS D'UN APPAREIL EMBARQUÉ

(30) Priorität: 18.11.2014 DE 102014116883
(43) Veröffentlichungstag der Anmeldung: 19.07.2017
(73) Patentinhaber: Schneider Electric Automation GmbH, 97828 Marktheidenfeld (DE)
(72) Erfinder: BERNER, Ralf, 88074 Meckenbeuren (DE); GLEIXNER, Thomas, 88690 Uhldingen (DE)
(74) Vertreter: Manitz Finsterwald Patent- und Rechtsanwaltspartnerschaft mbB
(86) Internationale Anmeldenummer: PCT/EP2015/076534
(87) Internationale Veröffentlichungsnummer: WO 2016/079018

(56) Entgegenhaltungen:
- EP-A1- 2 458 463
- EP-A2- 1 887 447
- DE-A1- 10 229 704
- US-A- 5 127 099

## Beschreibung

Die vorliegende Erfindung betrifft ein Verfahren zum Zugreifen auf Funktionen eines Embedded-Geräts, insbesondere einer speicherprogrammierbaren Steuerung.

Embedded-Geräte, d.h. beispielsweise speicherprogrammierbare Steuerungen (SPS) oder Programmable Logic Controller (PLC), werden in einer Vielzahl von Bereichen zur Steuerung von Maschinen und Anlagen eingesetzt. Insbesondere steuern solche Embedded-Geräte automatisierte Prozesse, wie beispielsweise Fertigungsstraßen, Kraftwerke oder Wasserversorgungssysteme.

Üblicherweise verfügen die Embedded-Geräte selbst über keine oder nur sehr geringe Sicherheitsmechanismen, die einen Zugriff unbefugter Personen auf die Embedded-Geräte verhindern. Ein solcher Zugriff kann beispielsweise mittels einer Datenverbindung unter Verwendung eines Fernzugriffs erfolgen. Um einen gewissen Schutz der Embedded-Geräte zu erreichen, werden die Embedded-Geräte herkömmlicherweise mittels einer separaten Firewall oder durch komplett abgeschottete Datennetze geschützt.

Nachteiligerweise muss ein Angreifer z.B. lediglich die Firewall überwinden, um auf die "hinter" der Firewall liegenden Embedded-Geräte zugreifen zu können. Insbesondere im Hinblick auf die zunehmende Vernetzung von Embedded-Geräten und die weiter steigende Anzahl von Angriffen über das Internet bzw. über Datennetze kommt der Abwehr solcher Bedrohungen eine immer größere Rolle zu.

Aus der EP 2 458 463 A1 ist ein Fernsteuerungssystem für eine Maschine bekannt. Dieses Dokument lehrt, in einer Datenbank registrierte Namen einem jeweiligen *"authorization level"* zuzuordnen, wobei nach einer einmaligen Autorisierung des Namens auf alle für den jeweiligen Namen freigegebenen Funktionen zugegriffen werden kann.

Es ist die der Erfindung zugrundeliegende Aufgabe, ein Embedded-Gerät und ein Verfahren zum Zugreifen auf ein solches Embedded-Gerät anzugeben, welche eine erhöhte Sicherheit des Embedded-Geräts gewährleisten.

Diese Aufgabe wird durch ein Verfahren gemäß Anspruch 1 und insbesondere dadurch gelöst, dass
(a) Funktionsblöcke des Embedded-Geräts zumindest zwei hierarchisch übereinanderliegenden Ebenen zugeordnet werden,
(b) ein Zugriff auf einen Funktionsblock des Embedded-Geräts von außerhalb des Embedded-Geräts mittels einer Datenschnittstelle erfolgt und
(c) bei dem Zugriff eine Authentifizierung für die Ebene, der der jeweilige Funktionsblock zugeordnet ist, und erneut für jede einzelne über der dem Funktionsblock zugeordneten Ebene liegenden Ebenen erfolgen muss, um eine Ausführung einer Funktion des Funktionsblocks zu gestatten, wobei die Funktionen der Funktionsblöcke einen Zugriff auf eine Firmware des Embedded-Geräts gestatten.

Der Erfindung liegt dabei die Erkenntnis zugrunde, dass die Sicherheit des Embedded-Geräts stark erhöht werden kann, wenn das Embedded-Gerät selbst mit Sicherheitsfunktionen ausgestattet wird. Zu diesem Zweck werden die Funktionen des Embedded-Geräts in Funktionsblöcke aufgeteilt, die wiederum hierarchisch übereinanderliegenden Ebenen zugeordnet werden. Um beispielsweise auf eine Ebene unterhalb der obersten Ebene zuzugreifen, muss zunächst eine Authentifizierung für die oberste Ebene erfolgen. Anschließend muss nochmals eine Authentifizierung für die untere Ebene durchgeführt werden.

Der damit implementierte Sicherheitsmechanismus beruht auf einem Zwiebelschalenprinzip, welches mehrfache Authentifizierungen für Funktionen in unteren Ebenen notwendig macht. Aufgrund der gegebenenfalls notwendigen mehrfachen Authentifizierung wird die Sicherheit, insbesondere von Funktionsblöcken in unteren Ebenen, deutlich erhöht.

Bevorzugt können in einer Ebene auch mehrere Funktionsblöcke angeordnet sein, wobei für die Funktionsblöcke in einer Ebene jeweils die gleiche Anzahl an Authentifizierungsvorgängen notwendig ist. Jedoch kann bei einer Authentifizierung für einen Funktionsblock nicht automatisch ein Zugriff auf sämtliche Funktionsblöcke der Ebene gewährt werden. Stattdessen kann eine vollständige, erneute Authentifizierung für jeden Funktionsblock der Ebene erforderlich sein.

Die Hierarchie der übereinanderliegenden Ebenen kann rein virtuell sein oder durch eine entsprechende Hintereinanderschaltung von Hardware des Embedded-Geräts geschaffen werden. Durch die Aufteilung der Funktionalität des Embedded-Geräts in mehrere Funktionsblöcke ergibt sich zudem der Vorteil, dass bei einem erfolgreichen Angriff lediglich Teile der Funktionalität des Embedded-Geräts freigeschaltet werden.

Ist ein Benutzer für eine Ebene authentifiziert, kann er auf die Funktionen der Funktionsblöcke zugreifen, d.h. deren Funktionalität nutzen und beispielsweise das Embedded-Gerät verändern, Parameter auslesen oder angeschlossene weitere Embedded-Geräte ansteuern.

Vorteilhafte Ausführungsformen der Erfindung sind der Beschreibung, den Unteransprüchen und den Zeichnungen zu entnehmen.

Gemäß einer ersten vorteilhaften Ausführungsform gestatten die Funktionen der Funktionsblöcke auch einen Zugriff auf das auf dem Embedded-Gerät ausgeführte Anwendungsprogramm. Auf dem Embedded-Gerät ist eine Firmware vorhanden, die als Betriebssystem fungiert. Auch kann die Firmware eine sogenannte "Runtime" zur Verfügung stellen, die bevorzugt echtzeitfähig ist und ein Anwendungsprogramm ausführt. Das Anwendungsprogramm kann beispielsweise Steuerbefehle zur Steuerung einer Industrieanlage und dergleichen enthalten. Die Funktionen der Funktionsblöcke können sich also sowohl auf die Firmware als auch auf das Anwendungsprogramm beziehen. Somit kann durch die Authentifizierung für verschiedene Ebenen ein Zugriff auf Funktionen der Firmware und/oder des Anwendungsprogramms erfolgen.

Gemäß einer weiteren vorteilhaften Ausführungsform erfolgt die Authentifizierung für verschiedene Ebenen durch unterschiedliche Schlüssel. Durch die Verwendung unterschiedlicher Schlüssel wird die Sicherheit des Embedded-Geräts zusätzlich erhöht.

Das Embedded-Gerät wendet zur Authentifizierung für eine Ebene bevorzugt ein schlüsselbasierendes kryptographisches Verfahren an. Beispielsweise wird eine Zufallszahl generiert, wobei der Schlüssel zur Authentifizierung für die jeweilige Ebene durch Verschlüsselung der Zufallszahl mittels eines öffentlichen Schlüssels erzeugt wird und das Embedded-Gerät den Schlüssel mittels eines privaten Schlüssels entschlüsselt und das Ergebnis der Entschlüsselung mit der Zufallszahl vergleicht. Die Verschlüsselung der Zufallszahl kann von einem Benutzer vorgenommen werden, der Zugriff auf das Embedded-Gerät benötigt.

Es kann also ein asymmetrisches Verschlüsselungsverfahren zur Erzeugung des Schlüssels und zur Verifizierung des Schlüssels verwendet werden. Der öffentliche und der private Schlüssel gehören zusammen und bilden ein Schlüsselpaar. Die Zufallszahl kann für jeden Authentifizierungsvorgang verschieden sein, wodurch auch ein Mitlesen der an das Embedded-Gerät übermittelten Schlüssel nicht zu einem erfolgreichen Angriff führt. Das Embedded-Gerät gibt den jeweiligen Funktionsblock dann frei, wenn die jeweils generierte Zufallszahl und der entschlüsselte Schlüssel gleich sind.

Alternativ kann auch ein symmetrisches Verschlüsselungsverfahren zur Authentifizierung an einer Ebene verwendet werden. Insbesondere kann die Zufallszahl dazu mit dem symmetrischen Verschlüsselungsverfahren ver- und entschlüsselt werden.

Als eine weitere Alternative kann auch die Eingabe eines Passworts erfolgen, um eine Authentifizierung für eine Ebene durchzuführen. Ebenfalls kann eine Kombination der Eingabe eines Passworts und der zusätzlichen Verwendung eines kryptographischen Verfahrens erfolgen.

Bevorzugt kann das Embedded-Gerät einen Webserver bereitstellen, über welchen auf die Funktionsblöcke des Embedded-Geräts zugegriffen werden kann. Der Zugriff kann insbesondere mittels einer Internetverbindung erfolgen, wobei ein Browser verwendet wird, um die von dem Webserver übermittelten Inhalte darzustellen.

Wird beispielsweise ein asymmetrisches Verschlüsselungsverfahren zur Authentifizierung verwendet, so kann ein dafür benötigter öffentlicher Schlüssel als Zertifikat in dem Browser gespeichert bzw. installiert sein, wodurch die Authentifizierung an dem Embedded-Gerät ohne Interaktion eines Benutzers erfolgen kann. Bevorzugt kann für jede Ebene ein separates Zertifikat verwendet werden, was die Sicherheit des Embedded-Geräts weiter erhöht.

Während des Betriebs des Embedded-Geräts kann ein Benutzer mit einem Webbrowser eine Datenverbindung zu dem Embedded-Gerät herstellen, woraufhin der Webserver des Embedded-Geräts an den Browser eine Zufallszahl übermittelt. Im Browser kann die Zufallszahl (z.B. mittels eines Plug-Ins) und dem öffentlichen Schlüssel eines Zertifikats verschlüsselt werden. Die verschlüsselte Zufallszahl wird an den Webserver des Embedded-Geräts zurückgesendet und von dem Webserver mittels des privaten Schlüssels entschlüsselt. Entsprechen sich die Zufallszahl und der entschlüsselte Wert, wird ein jeweiliger Funktionsblock freigegeben. Wird mittels des Browsers Zugriff auf einen Funktionsblock in einer unteren Ebene angefordert, so wird die voranstehend beschriebene Authentifizierung mehrmals hintereinander mit verschiedenen Zufallszahlen durchgeführt. Ein Eingriff des Nutzers wird hierzu nicht benötigt.

Entsprechend dem obigen Beispiel kann anstelle des asymmetrischen Verschlüsselungsverfahrens auch ein symmetrisches Verschlüsselungsverfahren eingesetzt werden. Dann kann die Zufallszahl jeweils mit dem gleichen Schlüssel im Browser verschlüsselt und im Embedded-Gerät entschlüsselt werden.

Gemäß einer weiteren vorteilhaften Ausführungsform wird ein erster Funktionsblock, welcher einen direkten Zugriff auf Hardware des Embedded-Geräts gestattet, in einer ersten Ebene angeordnet, die die unterste Ebene ist, wobei eine zu dem ersten Funktionsblock gehörende Funktion insbesondere direkten Zugriff auf eine Netzwerkschnittstelle gestattet. Die Netzwerkschnittstelle kann mit der Datenschnittstelle identisch sein oder eine separate Datenverbindung erlauben. Die Funktionen des ersten Funktionsblocks können beispielsweise die direkte Steuerung der Hardware der Datenschnittstelle oder einer Feldbusschnittstelle (z.B. CAN-Bus - Controller Area Network Bus oder SERCOS 3) ermöglichen. Insbesondere kann die Firmware des Embedded-Geräts den Zugriff auf die Hardware ermöglichen. Da ein Zugriff auf die Hardware die vollständige Kontrolle des Embedded-Geräts ermöglichen kann, ist der erste Funktionsblock in der untersten Ebene angeordnet, die die größte Sicherheit bietet.

Gemäß einer weiteren vorteilhaften Ausführungsform wird ein zweiter Funktionsblock, welcher einen direkten Zugriff auf einen Betriebssystemkern (Kernel) des Embedded-Geräts gestattet, in einer zweiten Ebene angeordnet, die oberhalb der ersten Ebene liegt. Dabei gestattet eine zu dem zweiten Funktionsblock gehörende Funktion insbesondere direkten Zugriff auf ein Dateisystem. Das Dateisystem kann zur Firmware des Embedded-Geräts gehören bzw. von der Firmware generiert werden.

Gemäß einer weiteren vorteilhaften Ausführungsform wird ein dritter Funktionsblock, welcher einen Zugriff auf das ausgeführte Anwendungsprogramm gestattet, in einer dritten Ebene angeordnet, die oberhalb der zweiten Ebene liegt. Dabei gestattet eine zu dem dritten Funktionsblock gehörende Funktion insbesondere eine Überwachung des ausgeführten Anwendungsprogramms. Mittels des dritten Funktionsblocks kann also ein Monitoring des Anwendungsprogramms aber auch der Firmware durchgeführt werden.

Gemäß einer weiteren vorteilhaften Ausführungsform wird ein vierter Funktionsblock, welcher einen Zugriff auf einen Webserver des Embedded-Geräts gestattet, in einer vierten Ebene angeordnet, die oberhalb der dritten Ebene liegt. Dabei gestattet eine zu dem vierten Funktionsblock gehörende Funktion insbesondere eine Dateneingabe und eine Datenausgabe an dem Webserver. Dies bedeutet, dass auch der Zugriff auf den Webserver selbst schon durch eine Authentifizierung geschützt werden kann.

Bevorzugt wird ein Zugriff auf Funktionen des Embedded-Geräts von einer Firewall des Embedded-Geräts überprüft. Die Firewall kann von dem Embedded-Gerät selbst bereitgestellt werden, d.h. beispielsweise als separate Hardware in dem Embedded-Gerät integriert sein. Die Firewall kann zusätzliche Sicherheit für das Embedded-Gerät schaffen, indem die Firewall beispielsweise eine Vorauswahl berechtigter Anfragen anhand von vorbestimmten Regeln durchführt.

Zusätzlich kann die Firewall als Endpunkt einer VPN-Verbindung (Virtual Private Network) dienen. In diesem Fall können ausschließlich Zugriffe mittels der VPN-Verbindung von dem Embedded-Gerät zugelassen werden.

Gemäß einer weiteren vorteilhaften Ausführungsform wird eine Benutzerverwaltung verwendet, in welcher Benutzer hinterlegt sind, denen eine Authentifizierung für vorbestimmte Funktionsblöcke gestattet ist. Die Authentifizierung kann zentral, beispielsweise mittels einer Zugriffsmatrix (ACM - Access Control Matrix) oder in der jeweiligen Ebene erfolgen. Für die jeweilige Ebene kann eine Zugriffsliste (ACL - Access Control List) vorliegen. In der Zugriffsmatrix und der Zugriffsliste können diejenigen Benutzer gespeichert sein, die jeweils auf die Funktionsblöcke einer bestimmten Ebene zugreifen dürfen. Die Zugriffsliste für eine Ebene kann jeweils in der darüber liegenden Ebene gespeichert sein.

Dabei können auch Benutzergruppen mit Zugriff auf unterschiedliche Ebenen gebildet werden. Insbesondere kann in der Zugriffsmatrix jeweils nur die unterste Ebene angegeben werden, auf die ein Benutzer oder eine Benutzergruppe Zugriff haben.

Die einzelnen Benutzer können jeweils über ein Zertifikat bzw. ihre jeweiligen öffentlichen und privaten Schlüssel identifiziert werden.

Die Zugriffsmatrix kann bevorzugt mit den verschiedenen Ebenen insbesondere mittels einer Interprozesskommunikation kommunizieren. Dabei kann beispielsweise der aus Linux bekannte D-Bus eingesetzt werden. Bevorzugt kann das Embedded-Gerät dazu Linux als Betriebssystem einsetzen oder auf einem Linuxbasierten Betriebssystem aufbauen.

Die Erfindung umfasst weiterhin ein Embedded-Gerät, insbesondere eine speicherprogrammierbare Steuerung, mit einer Datenschnittstelle, einer Recheneinrichtung und einer Speichereinrichtung. Das Embedded-Gerät zeichnet sich dadurch aus, das die Recheneinrichtung ausgebildet ist, Funktionsblöcke des Embedded-Geräts hierarchisch übereinanderliegenden Ebenen zuzuordnen, bei einem Zugriff auf einen Funktionsblock des Embedded-Geräts von außerhalb des Embedded-Geräts mittels der Datenschnittstelle eine Authentifizierung für die Ebene, der der Funktionsblock zugeordnet ist und erneut für jede einzelne über der dem Funktionsblock zugeordneten Ebene liegenden Ebenen durchzuführen, bevor eine Ausführung einer Funktion des Funktionsblocks gestattet wird, wobei die Funktionen der Funktionsblöcke einen Zugriff auf eine Firmware des Embedded-Geräts und insbesondere auch einen Zugriff auf ein auf dem Embedded-Gerät ausgeführtes Anwendungsprogramm gestatten.

In der Speichereinrichtung können die Firm- und die Software des Embedded-Geräts gespeichert sein, wobei sowohl Firm- als auch Software von der Recheneinrichtung ausgeführt werden.

Gemäß einer vorteilhaften Ausführungsform ist das Embedded-Gerät ausgebildet, eine Echtzeitanwendung auszuführen. Die Echtzeitfähigkeit des Embedded-Geräts ist insbesondere bei der Steuerung zeitkritischer Industrieprozesse notwendig, um ein Zusammenspiel verschiedener Komponenten bei solchen Industrieprozessen zu ermöglichen. Bei dem Embedded-Gerät handelt es sich also insbesondere nicht um einen "herkömmlichen" Personal Computer (PC).

Bevorzugt ist an dem Embedded-Gerät ein Feldbus-Anschluss vorgesehen und das Embedded-Gerät ist mit einer Spannung von 24 V betreibbar. Das Embedded-Gerät ist somit in die herkömmliche Infrastruktur von Automatisierungsprozessen ohne weiteres einbindbar. Bei dem Feldbusanschluss kann es sich dabei z.B. um einen Anschluss für den CAN-Bus handeln.

Im Übrigen gelten für das erfindungsgemäße Embedded-Gerät die zu dem erfindungsgemäßen Verfahren getroffenen Aussagen.

Nachfolgend wird die Erfindung rein beispielhaft unter Bezugnahme auf die Zeichnungen beschrieben. Es zeigen:
- Fig. 1: eine schematische Ansicht eines Embedded-Geräts mit hierarchisch übereinanderliegenden Ebenen und jeweils zugehörigen Funktionsblöcken; und
- Fig. 2: eine schematische Ansicht der Firm- und Software eines Embedded-Geräts.

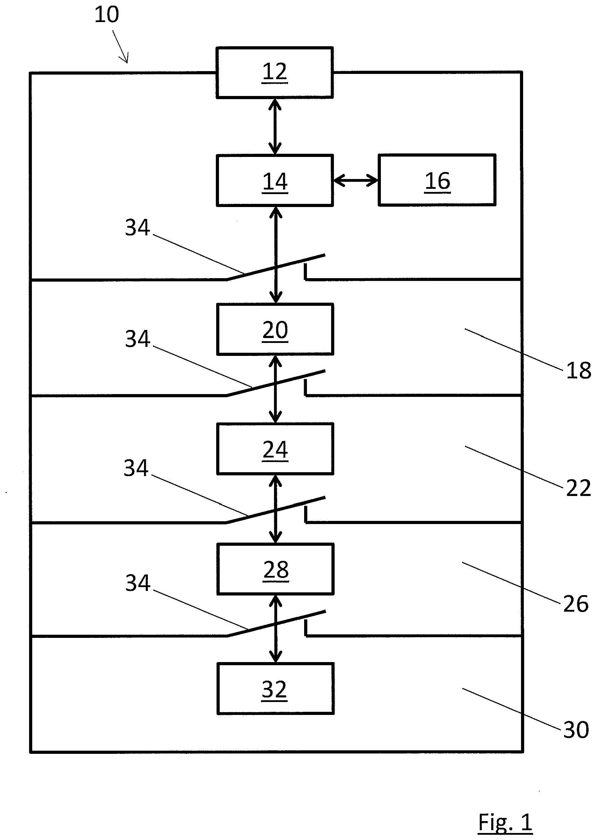

Fig. 1 zeigt schematisch ein Embedded-Gerät, nämlich eine speicherprogrammierbare Steuerung (SPS) 10. Die SPS 10 umfasst einen Ethernetanschluss 12, der als Datenschnittstelle zur Kommunikation z.B. mit einem Webbrowser eines (nicht gezeigten) Computers dient.

Die über den Ethernetanschluss 12 eingehenden Daten werden von einer Firewall 14 anhand von Firewall-Regeln 16 überprüft. Lediglich berechtigte Anfragen bzw. Daten werden von der Firewall 14 durchgelassen.

Hat eine Anfrage die Firewall 14 passiert, so kann nach einer weitergehenden Authentifizierung auf Funktionsblöcke zugegriffen werden, die hierarchisch übereinanderliegenden Ebenen zugeordnet sind. Dabei ist in einer obersten, d.h. vierten Ebene 18 ein Webserver 20 angeordnet. Der darunterliegenden dritten Ebene 22 ist ein Monitoring-Dienst 24 zugeordnet. Der dritten Ebene 22 kann auch der Zugriff auf ein Anwendungsprogramm zugeordnet sein.

Unterhalb der dritten Ebene 22 ist die zweite Ebene 26 vorgesehen, der der Betriebssystemkern 28, d.h. der Kernel bzw. die Runtime, zugeordnet ist. Die unterste und damit erste Ebene 30 umfasst einen Funktionsblock zum Hardwarezugriff 32.

Um Zugriff auf die Funktionsblöcke 20, 24, 28, 32 der verschiedenen Ebenen 18, 22, 26, 30 zu erlangen, muss für jede Ebene ein separater Authentifizierungsvorgang 34 durchgeführt werden, der in Fig. 1 durch einen öffenbaren Schalter symbolisiert ist. Bei jedem Authentifizierungsvorgang 34 wird bei dem dargestellten Ausführungsbeispiel eine Zufallszahl erzeugt, die über den Ethernetanschluss 12 an den zugreifenden Browser gesendet wird. Der Browser verschlüsselt die Zufallszahl mit einem öffentlichen Schlüssel, welcher in einem Zertifikat des Browsers enthalten ist. Die verschlüsselte Zufallszahl wird anschließend an die SPS 10 zurückgesandt und dort mit einem privaten Schlüssel entschlüsselt. Wenn das Ergebnis der Entschlüsselung mit der ursprünglichen Zufallszahl übereinstimmt, wird Zugriff auf die jeweilige Ebene 18, 22, 26, 30 gewährt. Um beispielsweise Zugriff auf den Betriebssystemkern 28 zu erlangen, sind somit drei Authentifizierungsvorgänge 34 notwendig, nämlich für die vierte Ebene 18, für die dritte Ebene 22 und für die zweite Ebene 26.

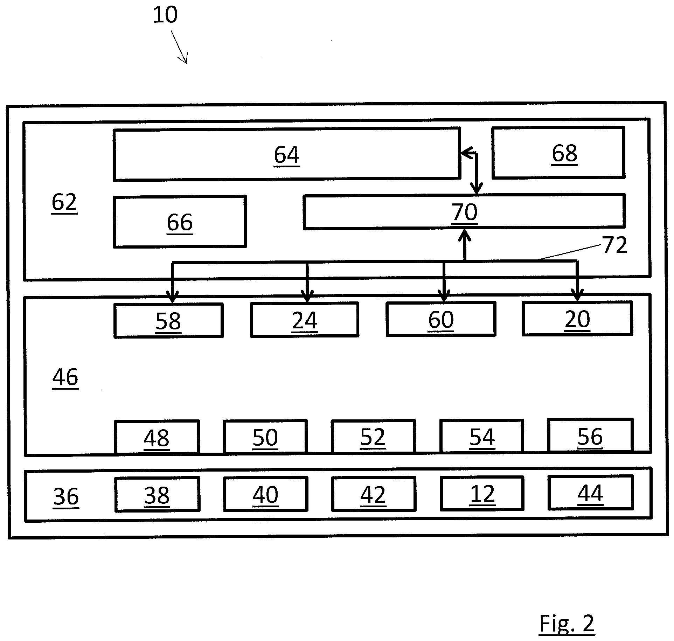

In Fig. 2 ist der schematische Aufbau der SPS 10 detaillierter dargestellt, wobei die SPS 10 im Wesentlichen drei Bereiche umfasst. Der erste Bereich ist eine Hardwareschicht 36, zu welcher der Ethernetanschluss 12 gehört. Die Hardwareschicht 36 umfasst zudem die Hardwarekomponenten für einen CAN-Bus 38 (Controller Area Network-Bus), für einen USB-Anschluss 40 (Universal Serial Bus), für einen Encoder 42 und einen berührungsempfindlichen Bildschirm 44.

Die Hardwareschicht 36 wird von einem Betriebssystem 46 gesteuert, welches den zweiten Bereich bildet und beispielsweise echtzeitfähig ist. Das Betriebssystem 46 umfasst einen CAN-Treiber 48, welcher den CAN-Bus 38 steuert. Weiterhin umfasst das Betriebssystem 46 einen USB-Treiber 50 zur Ansteuerung des USB-Anschlusses 40.

Der Encoder 42 ist über einen Encodertreiber 52 von dem Betriebssystem 46 steuerbar. Ein Ethernet-Stack 54 gewährleistet die Funktion des Ethernetanschlusses 12. Ein Graphiktreiber 56 übernimmt die Steuerung des berührungsempfindlichen Bildschirms 44.

Das Betriebssystem 46 stellt zudem verschiedene Dienste bereit, dazu zählen eine Ein- und Ausgabe-Verwaltung 58 (I/O-Management), der Monitoring-Dienst 24 und ein Hot-Code-Swap-Dienst 60. Die Ein- und Ausgabeverwaltung 58 ermöglicht dabei einen Zugriff auf Hardwarefunktionen, beispielsweise auf den CAN-Bus 38. Der Monitoring-Dienst 24 gestattet es, Prozesse des Betriebssystems 46 zu überwachen und beispielsweise einzelne Register des Betriebssystems 46 anzuzeigen.

Zur Änderung der Funktionalität der SPS 10 im laufenden Betrieb wird der Hot-Code-Swap-Dienst 60 verwendet, der es ermöglicht, Änderungen am Betriebssystem 46 zur Laufzeit vorzunehmen.

Das Betriebssystem 46 stellt zudem den Webserver 20 zur Verfügung.

Auf dem Betriebssystem 46 setzt eine Codeverwaltung 62 auf, die den dritten Bereich der SPS 10 darstellt. Die Codeverwaltung 62 dient im Wesentlichen dazu, ein Benutzerprogramm 64 auszuführen. Das Benutzerprogramm 64 kann beispielsweise der Steuerung einer Automatisierungsanlage dienen. Allgemein kann das Betriebssystem 46 der SPS 10 auch als Firmware und das Benutzerprogramm 64 als Software oder Anwendungsprogramm bezeichnet werden.

Zur Ausführung des Benutzerprogramms 64 umfasst die Codeverwaltung 62 Bibliotheken 66, die nicht in dem Benutzerprogramm 64 vorhandene Informationen enthalten. Die Codeverwaltung 62 umfasst ferner von dem Webserver 20 anzeigbare Webseiten 68 sowie eine Schlüsselverwaltung 70.

Die beim Ausführungsbeispiel vorhandene Schlüsselverwaltung 70 stellt im Wesentlichen die in Fig. 1 gezeigte Funktionalität der Authentifizierung an verschiedenen Ebenen 18, 22, 26, 30 mittels mehrerer Authentifizierungsvorgänge 34 bereit. Die Schlüsselverwaltung 70 umfasst zudem eine (nicht dargestellte) Benutzerverwaltung in Form einer Access Control Matrix (ACM). Zur Authentifizierung generiert die Schlüsselverwaltung für die jeweiligen Authentifizierungsvorgänge 34 die Zufallszahlen. Die Schlüsselverwaltung 70 kommuniziert mittels eines D-Busses 72 mit den verschiedenen Funktionsblöcken 20, 24, 28, 32, 60. Dabei wird zur Authentifizierung für die erste Ebene 30 mit der Ein- und Ausgabeverwaltung 58 kommuniziert, um Hardwarezugriffe 32 und Zugriffe auf den Betriebssystemkern des Betriebssystems 46 in der zweiten Ebene 26 zu gestatten.

Zugriffe auf den Monitoring-Dienst 24 erfordern einen Authentifizierungsvorgang 34 für die dritte Ebene 22, wozu die Schlüsselverwaltung 70 mit dem Monitoring-Dienst 24 kommuniziert. Der Hot-Code-Swap-Dienst 60 ist ebenfalls der dritten Ebene 22 zugeordnet (in Fig. 1 nicht gezeigt), weshalb die Schlüsselverwaltung auch mit dem Hot-Code-Swap-Dienst 60 kommuniziert. Für Zugriffe auf den Webserver 20 findet ein Datenaustausch zwischen der Schlüsselverwaltung 70 und dem Webserver 20 statt.

Zusätzlich zu Zugriffen auf die Hardwareschicht 36 und das Betriebssystem 46 kann die Schlüsselverwaltung auch einen Authentifizierungsvorgang 34 für das Benutzerprogramm 64 durchführen, wodurch beispielsweise gesperrte Teile des Benutzerprogramms 64 ausgeführt werden können.

Durch die Gliederung der SPS 10 in verschiedene Ebenen 18, 22, 26, 30 und der Zuordnung verschiedener Funktionsblöcke 20, 24, 28, 32, 60 zu diesen Ebenen kann je nach Wichtigkeit der verschiedenen Funktionsblöcke 20, 24, 28, 32, 60 ein unterschiedliches Sicherheitsniveau erzeugt werden. Dabei kann eine Abwägung zwischen dem erforderlichen Aufwand und dem benötigten Sicherheitsniveau getroffen werden.

### Bezugszeichenliste

- 10: SPS
- 12: Ethernetanschluss
- 14: Firewall
- 16: Firewallregeln
- 18: vierte Ebene
- 20: Webserver
- 22: dritte Ebene
- 24: Monitoring-Dienst
- 26: zweite Ebene
- 28: Betriebssystem kern
- 30: erste Ebene
- 32: Hardwarezugriff
- 34: Authentifizierungsvorgang
- 36: Hardwareschicht
- 38: CAN-Bus
- 40: USB-Anschluss
- 42: Encoder
- 44: berührungsempfindlicher Bildschirm
- 46: Betriebssystem
- 48: CAN-Treiber
- 50: USB-Treiber
- 52: Encoder-Treiber
- 54: Ethernet-Stack
- 56: Graphiktreiber
- 58: Ein- und Ausgabeverwaltung
- 60: Hot-Code-Swap-Dienst
- 62: Codeverwaltung
- 64: Benutzerprogramm
- 66: Bibliotheken
- 68: Webseiten
- 70: Schlüsselverwaltung
- 72: D-Bus

## Patentansprüche

1. Verfahren zum Zugreifen auf Funktionen eines Embedded-Geräts (10), bei welchem
(a) Funktionsblöcke (20, 24, 28, 32, 60) des Embedded-Geräts zumindest zwei hierarchisch übereinander liegenden Ebenen (18, 22, 26, 30) zugeordnet werden,
(b) ein Zugriff auf einen Funktionsblock (20, 24, 28, 32, 60) des Embedded-Geräts (10) von außerhalb des Embedded-Geräts (10) mittels einer Datenschnittstelle (12) erfolgt und
(c) bei dem Zugriff eine Authentifizierung (34) für die Ebene (18, 22, 26, 30), der der jeweilige Funktionsblock (20, 24, 28, 32, 60) zugeordnet ist, und erneut für jede einzelne über der dem Funktionsblock (20, 24, 28, 32, 60) zugeordneten Ebene (18, 22, 26, 30) liegenden Ebenen (18, 22, 26, 30) erfolgen muss, um eine Ausführung einer Funktion des Funktionsblocks (20, 24, 28, 32, 60) zu gestatten, wobei
die Funktionen der Funktionsblöcke (20, 24, 28, 32, 60) einen Zugriff auf eine Firmware (46) des Embedded-Geräts (10) gestatten.

2. Verfahren nach Anspruch 1,
**dadurch gekennzeichnet, dass**
die Funktionen der Funktionsblöcke (20, 24, 28, 32, 60) auch einen Zugriff auf das auf dem Embedded-Gerät (10) ausgeführte Anwendungsprogramm (64) gestatten.

3. Verfahren nach Anspruch 1 oder 2,
**dadurch gekennzeichnet, dass**
die Authentifizierung (34) für verschiedene Ebenen (18, 22, 26, 30) durch unterschiedliche Schlüssel erfolgt.

4. Verfahren nach zumindest einem der vorstehenden Ansprüche,
**dadurch gekennzeichnet, dass**
das Embedded-Gerät (10) zur Authentifizierung (34) für eine Ebene (18, 22, 26, 30) ein schlüsselbasierendes kryptographisches Verfahren anwendet.

5. Verfahren nach zumindest einem der vorstehenden Ansprüche,
**dadurch gekennzeichnet, dass**
ein erster Funktionsblock (32), welcher einen direkten Zugriff auf Hardware (36) des Embedded-Gerätes (10) gestattet in einer ersten Ebene (30), die die unterste Ebene ist, angeordnet wird, wobei eine zu dem ersten Funktionsblock (32) gehörende Funktion Zugriff auf eine Netzwerkschnittstelle (12) gestattet.

6. Verfahren nach Anspruch 5,
**dadurch gekennzeichnet, dass**
ein zweiter Funktionsblock (28), welcher einen direkten Zugriff auf einen Betriebssystemkern (Kernel) des Embedded-Gerätes (10) gestattet in einer zweiten Ebene (26), die oberhalb der ersten Ebene (30) liegt, angeordnet wird, wobei eine zu dem zweiten Funktionsblock (28) gehörende Funktion Zugriff auf ein Dateisystem gestattet.

7. Verfahren nach Anspruch 6,
**dadurch gekennzeichnet, dass**
ein dritter Funktionsblock (58), welcher einen Zugriff auf das ausgeführte Anwendungsprogramm (64) gestattet, in einer dritten Ebene (22), die oberhalb der zweiten Ebene (26) liegt, angeordnet wird, wobei eine zu dem dritten Funktionsblock (28) gehörende Funktion eine Überwachung (24) (Monitoring) des ausgeführten Anwendungsprogramms (64) gestattet.

8. Verfahren nach Anspruch 7,
**dadurch gekennzeichnet, dass**
ein vierter Funktionsblock, welcher einen Zugriff auf einen Webserver (20) des Embedded-Geräts (10) gestattet, in einer vierten Ebene (18), die oberhalb der dritten Ebene (22) liegt, angeordnet wird, wobei eine zu dem vierten Funktionsblock gehörende Funktion eine Dateneingabe und eine Datenausgabe an dem Webserver (20) gestattet.

9. Verfahren nach zumindest einem der vorstehenden Ansprüche,
**dadurch gekennzeichnet, dass**
ein Zugriff auf Funktionen des Embedded-Geräts (10) von einer Firewall (14) des Embedded-Geräts (10) überprüft wird.

10. Verfahren nach zumindest einem der vorstehenden Ansprüche,
**dadurch gekennzeichnet, dass**
eine Benutzerverwaltung (70) verwendet wird, in welcher Benutzer hinterlegt sind, denen eine Authentifizierung (34) für vorbestimmte Funktionsblöcke (20, 24, 28, 32, 60) gestattet ist.

11. Embedded-Gerät (10) mit
einer Datenschnittstelle (12),
einer Recheneinrichtung und
einer Speichereinrichtung,
wobei die Recheneinrichtung ausgebildet ist,
a) Funktionsblöcke (20, 24, 28, 32, 60) des Embedded-Geräts (10) hierarchisch übereinander liegenden Ebenen (18, 22, 26, 30) zuzuordnen,
b) bei einem Zugriff auf einen Funktionsblock (20, 24, 28, 32, 60) des Embedded-Geräts (10) von außerhalb des Embedded-Geräts (10) mittels der Datenschnittstelle (12) eine Authentifizierung (34) für die Ebene (18, 22, 26, 30), der der Funktionsblock (20, 24, 28, 32, 60) zugeordnet ist, und erneut für jede einzelne über der dem Funktionsblock (20, 24, 28, 32, 60) zugeordneten Ebene (18, 22, 26, 30) liegenden Ebenen (18, 22, 26, 30) durchzuführen, bevor eine Ausführung einer Funktion des Funktionsblocks (20, 24, 28, 32, 60) gestattet wird, wobei
c) die Funktionen der Funktionsblöcke (20, 24, 28, 32, 60) einen Zugriff auf eine Firmware (46) des Embedded-Geräts (10) gestatten.

12. Embedded-Gerät (10) nach Anspruch 11,
**dadurch gekennzeichnet, dass**
das Embedded-Gerät (10) ausgebildet ist, eine Echtzeitanwendung auszuführen.

13. Embedded-Gerät nach Anspruch 11 oder 12,
**dadurch gekennzeichnet, dass**
ein Feldbus-Anschluss (38) vorgesehen ist und das Embedded-Gerät (10) mit einer Spannung von 24 Volt betreibbar ist.

## Claims

1. A method of accessing functions of an embedded device (10) in which
(a) functional blocks (20, 24, 28, 32, 60) of the embedded device are associated with at least two levels (18, 22, 26, 30) disposed above one another hierarchically;
(b) access to a functional block (20, 24, 28, 32, 60) of the embedded device (10) from outside the embedded device (10) takes place by means of a data interface (12); and
(c) an authentication (34) has to take place on the access for the level (18, 22, 26, 30) with which the respective functional block (20, 24, 28, 32, 60) is associated and again for every single level (18, 22, 26, 30) disposed above the level (18, 22, 26, 30) associated with the functional block (20, 24, 28, 32, 60) to permit an execution of a function of the functional block, (20, 24, 28, 32, 60), wherein
the functions of the functional blocks (20, 24, 28, 32, 60) permit access to firmware (46) of the embedded device (10).

2. A method in accordance with claim 1,
**characterized in that**
the functions of the functional blocks (20, 24, 28, 32, 60) also permit access to the application program (64) executed on the embedded device (10).

3. A method in accordance with claim 1 or claim 2,
**characterized in that**
the authentication (34) for different levels (18, 22, 26, 30) takes place by different keys.

4. A method in accordance with at least one of the preceding claims,
**characterized in that**
the embedded device (10) uses a key-based cryptographic process for the authentication (34) for a level (18, 22, 26, 30).

5. A method in accordance with at least one of the preceding claims,
**characterized in that**
a first functional block (32) which permits direct access to hardware (36) of the embedded device (10) is arranged in a first level (30) which is the lowest level, with a function belonging to the first functional block (32) permitting access to a network interface (12).

6. A method in accordance with claim 5,
**characterized in that**
a second functional block (28) which permits direct access to an operating system kernel of the embedded device (10) is arranged in a second level (26) which is disposed above the first level (30), with a function belonging to the second functional block (28) permitting access to a file system.

7. A method in accordance with claim 6,
**characterized in that**
a third functional block (58) which permits access to the executed application program (64) is arranged in a third level (22) which is disposed above the second level, with a function belonging to the third functional block (58) permitting a monitoring (24) of the executed application program (64).

8. A method in accordance with claim 7,
**characterized in that**
a fourth functional block which permits access to a web server (20) of the embedded device (10) is arranged in a fourth level (18) which is disposed above the third level (22), with a function belonging to the fourth functional block permitting a data input and a data output at the web server (20).

9. A method in accordance with at least one of the preceding claims,
**characterized in that**
access to functions of the embedded device (10) is checked by a firewall (14) of the embedded device (10).

10. A method in accordance with at least one of the preceding claims,
**characterized in that**
a user management (70) is used in which users are stored to whom authentication (34) for predefined functional blocks (20, 24, 38, 32, 60) is permitted.

11. An embedded device (10) comprising
a data interface (12);
a processing device; and
a memory device,
wherein
the processing device is configured
a) to associate functional blocks (20, 24, 28, 32, 60) of the embedded device (10) with levels (18, 22, 26, 30) disposed above one another hierarchically; and
b) to carry out an authentication (34) on access to a functional block (20, 24, 28, 32, 60) of the embedded device (10) from outside the embedded device (10) by means of the data interface (12) for the level (18, 22, 26, 30) with which the functional block (20, 24, 28, 32, 60) is associated and again for every single level (18, 22, 26, 30) disposed above the level (18, 22, 26, 30) associated with the functional block (20, 24, 28, 32, 60) before an execution of a function of the functional block (20, 24, 28, 32, 60) is permitted, wherein
c) the functions of the functional blocks (20, 24, 28, 32, 60) permit access to firmware (46) of the embedded device (10).

12. An embedded device (10) in accordance with claim 11,
**characterized in that**
the embedded device (10) is configured to execute a real-time application.

13. An embedded device in accordance with claim 11 or claim 12,
**characterized in that**
a fieldbus connector (38) is provided and the embedded device (10) is operable at a voltage of 24 volts.

## Revendications

1. Procédé pour accéder à des fonctions d'un appareil embarqué (10), dans lequel
a) des blocs de fonctions (20, 24, 28, 32, 60) de l'appareil embarqué sont associés à au moins deux niveaux (18, 22, 26, 30) hiérarchiquement superposés,
b) un accès à un bloc de fonctions (20, 24, 28, 32, 60) de l'appareil embarqué (10) s'effectue depuis l'extérieur de l'appareil embarqué (10) au moyen d'une interface de données (12) et
c) lors de l'accès, une authentification (34) pour le niveau (18, 22, 26, 30) auquel le bloc de fonctions respectif (20, 24, 28, 32, 60) est associé doit être effectuée, et à nouveau pour chaque niveau individuel (18, 22, 26, 30) situé au-dessus du niveau (18, 22, 26, 30) associé au bloc de fonctions (20, 24, 28, 32, 60), pour permettre l'exécution d'une fonction du bloc de fonctions (20, 24, 28, 32, 60), dans lequel
les fonctions des blocs de fonctions (20, 24, 28, 32, 60) permettent un accès à un micrologiciel (46) de l'appareil embarqué (10).

2. Procédé selon la revendication 1,
**caractérisé en ce**
**que** les fonctions des blocs de fonctions (20, 24, 28, 32, 60) permettent également un accès au programme d'application (64) exécuté sur l'appareil embarqué (10).

3. Procédé selon la revendication 1 ou 2,
**caractérisé en ce**
**que** l'authentification (34) pour différents niveaux (18, 22, 26, 30) s'effectue au moyen de différentes clés.

4. Procédé selon au moins l'une des revendications précédentes,
**caractérisé en ce**
**que** l'appareil embarqué (10) utilise un procédé cryptographique basée sur une clé pour l'authentification (34) pour un niveau (18, 22, 26, 30).

5. Procédé selon au moins l'une des revendications précédentes,
**caractérisé en ce**
**qu'**un premier bloc de fonctions (32), qui permet un accès direct au matériel (36) de l'appareil embarqué (10), est disposé à un premier niveau (30) qui est le niveau le plus bas, dans lequel une fonction appartenant au premier bloc de fonctions (32) permet un accès à une interface de réseau (12).

6. Procédé selon la revendication 5,
**caractérisé en ce**
**qu'**un deuxième bloc de fonctions (28), qui permet un accès direct à un noyau de système d'exploitation (kernel) de l'appareil embarqué (10), est disposé à un deuxième niveau (26) qui se situe au-dessus du premier niveau (30), dans lequel une fonction appartenant au deuxième bloc de fonctions (28) permet un accès à un système de fichiers.

7. Procédé selon la revendication 6,
**caractérisé en ce**
**qu'**un troisième bloc de fonctions (58), qui permet un accès au programme d'application exécuté (64), est disposé à un troisième niveau (22) qui se situe au-dessus du deuxième niveau (26), dans lequel une fonction appartenant au troisième bloc de fonctions (28) permet une surveillance (24) (monitoring) du programme d'application exécuté (64).

8. Procédé selon la revendication 7,
**caractérisé en ce**
**qu'**un quatrième bloc de fonctions, qui permet un accès à un serveur web (20) de l'appareil embarqué (10), est disposé à un quatrième niveau (18) qui se situe au-dessus du troisième niveau (22), dans lequel une fonction appartenant au quatrième bloc de fonctions permet une entrée de données et une sortie de données au serveur web (20).

9. Procédé selon au moins l'une des revendications précédentes,
**caractérisé en ce**
**qu'**un accès à des fonctions de l'appareil embarqué (10) est vérifié par un pare-feu (14) de l'appareil embarqué (10).

10. Procédé selon au moins l'une des revendications précédentes,
**caractérisé en ce**
**qu'**une administration d'utilisateurs (70) est utilisée, dans laquelle sont enregistrés les utilisateurs auxquels une authentification (34) pour des blocs de fonctions prédéterminés (20, 24, 28, 32, 60) est permise.

11. Appareil embarqué (10) comportant
une interface de données (12),
un moyen de calcul et
un moyen de stockage,
dans lequel le moyen de calcul est conçu pour
a) associer des blocs de fonctions (20, 24, 28, 32, 60) de l'appareil embarqué (10) à des niveaux hiérarchiquement superposés (18, 22, 26, 30),
b) lors d'un accès à un bloc de fonctions (20, 24, 28, 32, 60) de l'appareil embarqué (10) depuis l'extérieur de l'appareil embarqué (10) au moyen de l'interface de données (12), effectuer une authentification (34) pour le niveau (18, 22, 26, 30) auquel le bloc de fonctions (20, 24, 28, 32, 60) est associé, et à nouveau pour chaque niveau individuel (18, 22, 26, 30) situé au-dessus du niveau (18, 22, 26, 30) associé au bloc de fonctions (20, 24, 28, 32, 60) avant qu'une exécution d'une fonction du bloc de fonctions (20, 24, 28, 32, 60) ne soit permise, dans lequel
c) les fonctions des blocs de fonctions (20, 24, 28, 32, 60) permettent un accès à un micrologiciel (46) de l'appareil embarqué (10).

12. Appareil embarqué (10) selon la revendication 11,
**caractérisé en ce**
**que** l'appareil embarqué (10) est conçu pour exécuter une application en temps réel.

13. Appareil embarqué selon la revendication 11 ou 12,
**caractérisé en ce**
**qu'**une connexion de bus de terrain (38) est prévue et que l'appareil embarqué (10) peut fonctionner avec une tension de 24 volts.
